# EUROPEAN PATENT APPLICATION

(11) **EP 4 372 863 A2**
(43) Date of publication of application: **22.05.2024**
(21) Application number: 23194624.5
(22) Date of filing: 31.08.2023
(51) Int. Cl.: H01M 10/0585, H01M 10/04, H01M 50/103, H01M 50/15, H01M 50/538, H01M 50/176, H01M 50/54, H01M 50/566, H01M 50/553, H01M 50/188, H01M 50/55, H01M 50/30, H01M 50/529, H01M 50/533, H01M 50/536, H01M 50/148

(54) **SECONDARY BATTERY**

(30) Priority: 25.10.2022 KR 20220138272
(71) Applicant: Samsung SDI Co., Ltd., Yongin-si, Gyeonggi-do 17084 (KR)
(72) Inventor: Yeo, Ha Ram, 17084 Yongin-si, Gyeonggi-do (KR); Hwang, In Hyun, 17084 Yongin-si, Gyeonggi-do (KR); Kim, Bum Rae, 17084 Yongin-si, Gyeonggi-do (KR)
(74) Representative: Gulde & Partner

(57) **Abstract**

A secondary battery (100) having weldability between a current collector plate (120, 130) and an electrode-uncoated portion (111a, 112a) by increasing an absorption rate of a laser beam irradiated onto the current collector plate (120, 130). The secondary battery (100) includes an electrode assembly (110) including a first electrode plate (111) having a first electrode-uncoated portion (111a) protruding to one side, a second electrode plate (112) having a second electrode-uncoated portion (112a) protruding to an opposite side, and a separator (113) between the first and second electrode plates (111, 112); a case (160) accommodating the electrode assembly (110) and having a bottom surface (161) and long and short side surfaces (162, 163) extending upward from the bottom surface (161); and a first current collector plate (120, 120') having a flat portion, parallel to a short side surface (163), that is laser-welded to the first electrode-uncoated portion (111a), and a protrusion portion protruding from the flat portion toward the short side surface (163). A surface treatment part is on the flat portion.

## Description

### BACKGROUND

### 1. Field

The present invention relates to a secondary battery.

### 2. Description of the Related Art

A secondary battery is a power storage system that provides excellent energy density capable of converting electrical energy into chemical energy and storing the same. Compared to non-rechargeable primary batteries, secondary batteries are rechargeable and are widely used in IT devices such as smart phones, cellular phones, notebooks, and tablet PCs. Recently, interest in electric vehicles has increased to prevent environmental pollution, and accordingly, high-capacity secondary batteries are being adopted for electric vehicles. These secondary batteries are required to have characteristics such as high density, high power, and stability.

The above information disclosed in this Background section is only for enhancement of understanding of the background of the present invention and therefore it may contain information that does not constitute prior art.

### SUMMARY

The present invention provides a secondary battery capable of improving weldability between a current collector plate and an electrode-uncoated portion by increasing an absorption rate of a laser beam irradiated onto the current collector plate.

A secondary battery according to the present invention may include: an electrode assembly including a first electrode plate having a first electrode-uncoated portion protruding to one side, a second electrode plate having a second electrode-uncoated portion protruding to an opposite side, and a separator between the first electrode plate and the second electrode plate; a case accommodating the electrode assembly and having a bottom surface and long and short side surfaces extending upward from the bottom surface; and a first current collector plate having a flat portion electrically connected to the first electrode plate, extending parallel to a short side surface of the short side surfaces, and laser-welded to the first electrode-uncoated portion, and a protrusion portion protruding from the flat portion toward the short side surface, wherein a surface treatment is formed on the flat portion (i.e., a surface-treated region forms a surface treatment part on the flat portion).

The surface treatment (the region on which the surface treatment is formed on) may have greater surface roughness than other regions of the first current collector plate.

The surface roughness of the surface treatment part may be in a range from approximately 25 to approximately 100 times the surface roughness of the other regions of the first current collector plate.

The first electrode plate may include a first surface in contact with the first electrode-uncoated portion and a second surface opposite to the first surface and facing the short side surface, and the surface treatment (part) may be on the second surface.

The first electrode plate may include a first surface in contact with the first electrode-uncoated portion and a second surface opposite to the first surface and facing the short side surface, and the surface treatment (part) may be on both the first surface and the second surface.

The first electrode-uncoated portion may be located at an upper portion and a lower portion of one side of the first electrode plate, and the flat portion may include a first flat portion welded to the first electrode-uncoated portion at the upper portion of the first electrode plate and a second flat portion welded to the first electrode-uncoated portion at the lower portion of the first electrode.

The protrusion part may be between the first flat portion and the second flat portion.

A thickness of the protrusion portion may be greater than a thickness of the flat portion.

A line-shaped welding region may be at the surface treatment.

The secondary battery may further include: a cap plate coupled to an upper portion of the case; a second current collector plate electrically connected to the second electrode plate and formed parallel to the short side surface; a first terminal part electrically connected to the first current collector plate and protruding upward from the cap plate; and a second terminal part electrically connected to the second current collector plate and protruding upward from the cap plate.

Each of the first and second terminal part may include a connection plate, a terminal pillar, and a terminal plate.

The connection plate of the first terminal part may be positioned above the electrode assembly and may be electrically connected to the first current collector plate.

The connection plate of the second terminal part may be positioned above the electrode assembly and may be electrically connected to the second current collector plate.

The cap plate may include: a gasket formed between the terminal pillars and the cap plate at a lower portion of the cap plate; and a coupling member formed between the terminal pillars and the cap plate at an upper portion of the cap plate.

The coupling member may be formed on the terminal pillar of the first terminal part and may electrically connect the cap plate and the first terminal part to each other.

The coupling member may be formed on the terminal pillar of the second terminal part and may insulate the cap plate and the second terminal part from each other.

The cap plate may further include: an electrolyte injection hole formed through the cap plate; a plug coupled to the electrolyte injection hole; and a safety vent formed at a substantially central portion of the cap plate.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIG. 1 is an exploded perspective view illustrating a secondary battery according to an embodiment of the present invention.
FIG. 2 is a cross-sectional view of the secondary battery of FIG. 1.
FIG. 3 is a side view illustrating a state in which a first current collector plate is coupled to an electrode assembly.
FIGS. 4A and 4B show a cross-sectional view and a plan view, respectively, illustrating the first current collector plate of FIG. 3.
FIG. 5 is a cross-sectional view depicting a method of welding a first electrode-uncoated portion to a first current collector plate.
FIGS. 6A and 6B are diagrams illustrating the results of testing the effect on laser welding according to surface roughness.
FIG. 7 is a cross-sectional view illustrating a first current collector plate according to another embodiment of the present invention.

### DETAILED DESCRIPTION

Hereinafter, preferred embodiments of the present invention will be described in detail with reference to the accompanying drawings.

Embodiments of the present invention are provided to more fully describe the present invention to those skilled in the art, and the following embodiments may be embodied in many different forms and should not be construed as being limited to the example embodiments set forth herein. Rather, these example embodiments are provided so that this disclosure will be thorough and complete and will convey the aspects and features of the present invention to those skilled in the art.

In addition, in the accompanying drawings, sizes or thicknesses of various components are exaggerated for brevity and clarity. Like numbers refer to like elements throughout. In addition, it will be understood that when an element A is referred to as being "connected to" an element B, the element A can be directly connected to the element B or an intervening element C may be present therebetween such that the element A and the element B are indirectly connected to each other. As used herein, the term "and/or" includes any and all combinations of one or more of the associated listed items.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise" and/or "comprising," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

A preferred embodiment of the present invention will be described in detail with reference to the accompanying drawings to the extent that those skilled in the art can easily practice the present invention.

Here, the same reference numerals are assigned to parts having similar configurations and operations throughout the specification. In addition, when a part is said to be electrically coupled to another part, this includes not only a case where it is directly connected but also a case where it is connected with another element interposed therebetween.

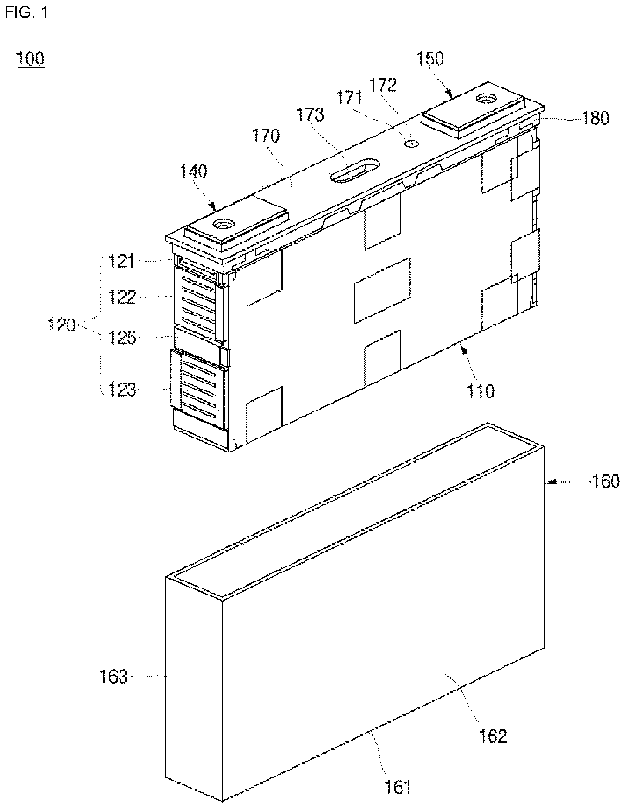

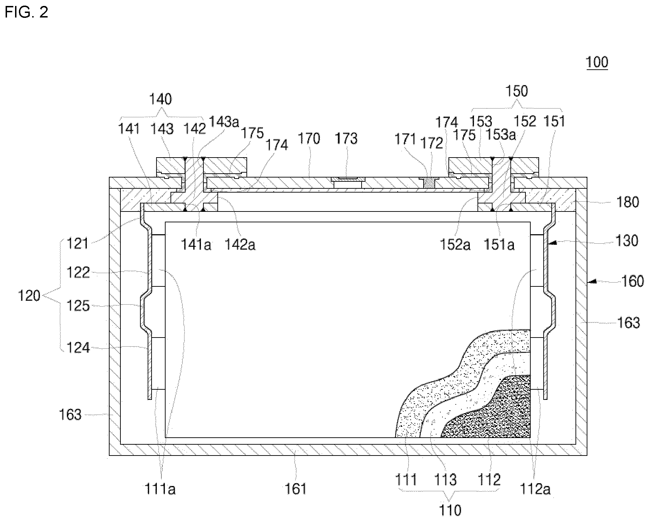

FIG. 1 is an exploded perspective view illustrating a secondary battery according to an embodiment of the present invention. FIG. 2 is a cross-sectional view of the secondary battery of FIG. 1.

Referring to FIGS. 1 and 2, a secondary battery 100 according to an embodiment of the present invention may include an electrode assembly 110, a first current collector plate 120, a second current collector plate 130, a first terminal part 140, a second terminal part 150, a case 160, a cap plate 170, and an insulating member 180.

In some examples, a first electrode plate 111 of the electrode assembly 110 is formed by applying a first electrode active material such as a transition metal oxide to a first electrode current collector formed of a metal foil such as aluminum or aluminum alloy, and may include a first electrode-uncoated portion 111a, which is a region to which the first electrode active material is not applied. In addition, the first electrode-uncoated portion 111a may be formed to overlap at the same position where the first electrode plates 111 are stacked to form a multi-tap structure. In some examples, the first electrode-uncoated portion 111a may be referred to as a first current collecting tab. Since the first electrode-uncoated portion 111a is configured to be integrally formed with the first electrode plate 111 and is drawn (extending) from each of the stacked first electrode plates 111, current collection efficiency of the electrode assembly 110 may be increased. In some examples, the first electrode-uncoated portions 111a may protrude to one side of the electrode assembly 110 and may be positioned above and below the first electrode plate 111, respectively. In other words, the first electrode-uncoated portions 111a protrude in the same direction, but may be spaced apart from each other (e.g., the first electrode-uncoated portions 111a may be spaced apart from each other in a height direction along a vertical edge of the first electrode plate 111).

In some examples, the second electrode plate 112 of the electrode assembly 110 is formed by applying a second electrode active material such as graphite or carbon to a second electrode current collector formed of a metal foil such as copper, a copper alloy, nickel, or a nickel alloy, and may include a second electrode-uncoated portion 112a, which is a region to which the second electrode active material is not applied. In addition, the second electrode-uncoated portions 112a may be formed to overlap at the same position where the second electrode plates 112 are stacked to form a multi-tap structure. In some examples, the second electrode-uncoated portion 112a may be referred to as a first current collecting tab. Since the second electrode-uncoated portion 112a is configured to be integrally formed with the second electrode plate 112 and is drawn (extending) from each of the stacked second electrode plates 112, current collection efficiency of the electrode assembly 110 may be increased. In some examples, the second electrode-uncoated portions 112a may protrude to the other side of the electrode assembly 110 and may be positioned above and below the second electrode plate 112. In other words, the second electrode-uncoated portions 112a protrude in the same direction, but may be spaced apart from each other (e.g., the second electrode-uncoated portions 112a may be spaced apart from each other in a height direction along a vertical edge of the second electrode plate 112).

In some examples, a separator 113 is positioned between the first electrode plate 111 and the second electrode plate 112 to prevent a short circuit and to enable the movement of lithium ions. The separator 113 may include polyethylene, polypropylene, or a composite film of polyethylene and polypropylene. In addition, the separator 113 may be replaced with an inorganic solid electrolyte such as a sulfide, oxide, or phosphate compound that does not require a liquid or gel electrolyte. The first current collector plate 120 and the second current collector plate 130, which are electrically connected to the first electrode tab 111a of the first electrode plate 111 and the second electrode tab 112a of the second electrode plate 112, respectively, are positioned at both ends (opposite ends) of the electrode assembly 110.

In some examples, the electrode assembly 110 may be accommodated in the case 160 together with an electrolyte. In some examples, the electrolyte may contain a lithium salt such as LiPF₆ or LiBF₄ in an organic solvent such as EC, PC, DEC, EMC, or DMC. In addition, the electrolyte may be in a liquid or gel phase. In some examples, when an inorganic solid electrolyte is used, the electrolyte may be omitted.

The first current collector 120 is made of a metal (e.g., aluminum) and may be electrically connected to the first electrode plate 111. The first current collector plate 111 may be located on one side of the electrode assembly 110 and may be connected to the first electrode-uncoated portion 111a by welding. In some examples, a plurality of first electrode-uncoated portions 111a may be bent in one direction and laser welded to the first current collector plate 120. The structure of the first current collector plate 120 will be described in more detail below.

The second current collector plate 130 is made of a metal (e.g., copper) and may be electrically connected to the second electrode plate 112. The second current collector plate 130 may be located on the other (opposite) side of the electrode assembly 110 and may be connected to the second electrode-uncoated portion 112a by welding. A plurality of second electrode-uncoated portions 112a may be bent in one direction and laser welded to the second current collector plate 130.

The first terminal part 140 may be electrically connected to the first current collector plate 120. The first terminal part 140 may include a connection plate 141, a terminal pillar 142, and a terminal plate 143.

The connection plate 141 is positioned above the electrode assembly 110 and may be electrically connected to the first current collector plate 120. The connection plate 141 may be formed perpendicular to the first current collector plate 120. The connection plate 141 may include a hole 141a to which the terminal pillar 142 is coupled (e.g., a portion of the terminal pillar 142 is accommodated in the hole 141a). In some examples, the connection plate 141 may be integrally formed with the first current collector plate 120 or may be a part of the first current collector plate 120.

The terminal pillar 142 may have a lower portion coupled to the hole 141a of the connection plate 141 and an upper portion penetrating the cap plate 170 (e.g., an opening or hole in the cap plate 170) and protruding upward from the cap plate 170. A flange 142a extending laterally may be formed below the terminal pillar 142 so as to prevent the terminal pillar 142 from falling out of the cap plate 170 (e.g., a portion of the terminal pillar 142 extends through the opening in the cap plate 170 and the flange 142a below the cap plate 170 prevents the terminal pillar 142 from inadvertently withdrawing from the opening in the cap plate 170). In some examples, the terminal pillar 142 may be electrically connected to the cap plate 170.

The terminal plate 143 may include a hole 143a to which the terminal pillar 142 is coupled (e.g., the terminal pillar 142 extends through the hole 143a in the terminal plate 143). The terminal plate 143 may be coupled to the upper portion of the terminal pillar 142 protruding above the cap plate 170. In some examples, the terminal pillar 142 may be coupled to the hole 143a of the terminal plate 143 and riveted and/or welded.

The second terminal part 150 is electrically connected to the second current collector plate 130 and may have the same shape as the first terminal part 140. The second terminal part 150 may include a connection plate 151, a terminal pillar 152, and a terminal plate 153.

The connection plate 151 is positioned above the electrode assembly 110 and may be electrically connected to the second current collector plate 130. The connection plate 151 may be formed perpendicular to the second current collector plate 130. The connection plate 151 may include a hole 151a to which the terminal pillar 152 is coupled (e.g., a portion of the terminal pillar 152 is accommodated in the hole 151a). In some examples, the connection plate 151 may be integrally formed with the second current collector plate 130 or may be a part of the second current collector plate 130.

The terminal pillar 152 may have a lower portion coupled to the hole 151a of the connection plate 151 and an upper portion penetrating the cap plate 170 and protruding upward from the cap plate 170. A flange 152a extending laterally may be formed below the terminal pillar 152 so as to prevent the terminal pillar 152 from falling out of the cap plate 170 (e.g., a portion of the terminal pillar 152 extends through the opening in the cap plate 170 and the flange 142a below the cap plate 170 prevents the terminal pillar 152 from inadvertently withdrawing from the opening in the cap plate 170). In some examples, the terminal pillar 152 may be electrically isolated from cap plate 170.

The terminal plate 153 may include a hole 153a to which the terminal pillar 152 is coupled (e.g., the terminal pillar 152 extends through the hole 153a in the terminal plate 153). The terminal plate 153 may be coupled to the upper portion of the terminal pillar 152 protruding above the cap plate 170. In some examples, the terminal pillar 152 may be coupled to the hole 153a of the terminal plate 153 and riveted and/or welded.

The case 160 may be made of a conductive metal such as aluminum, an aluminum alloy, or nickel-plated steel. The case 160 may be shaped of a substantially hexahedron (e.g., a cuboid) having an opening into which the electrode assembly 110 can be inserted and seated. For example, the case may include a bottom surface 161, a pair of long side surfaces 162, and a pair of short side surfaces 163 extending upward from the bottom surface 161. Here, the long side surface 162 may refer to a surface having a relatively larger area than the short side surface 163. The cap plate 170 may be coupled to the opening of the case 160 to seal the case 160. The inner surface of the case 160 is insulated (at least in part) to prevent an electrical short circuit from occurring inside. In addition, in some cases, one electrode of the electrode assembly 110 may be electrically connected to the case 160 through the cap plate 170. Even in this case, an electrical short circuit inside the case 160 can be prevented by the insulation process inside the case 160. For example, the case 160 may act as a positive electrode.

The cap plate 170 may be coupled to the case 160. The cap plate 170 seals the opening of the case 160 and may be made of the same material as the case 160. In some examples, the cap plate 170 may be coupled to the case 160 by laser welding. In one or more embodiments, since the cap plate 170 may have the same polarity as that of the first terminal part 140 as described above, the cap plate 170 and the case 160 may have the same polarity. The cap plate 170 may include an electrolyte injection hole 171, a plug 172, a safety vent 173, a gasket 174, and a coupling member 175.

The electrolyte injection hole 171 may be formed through the cap plate 170. The electrolyte injection hole 171 is a hole for injecting electrolyte into the case 160. The plug 172 may be coupled to the electrolyte injection hole 171. That is, the electrolyte injection hole 171 may be sealed by the plug 172 after the electrolyte is injected.

The safety vent 173 may be formed at a substantially central portion of the cap plate 170. The safety vent 173 may be formed to be relatively thinner than the thickness of the cap plate 170. In addition, a notch may be formed in the safety vent 173 so as to be opened (e.g., ruptured) at a set pressure. In some examples, when the pressure inside the case 160 exceeds the set pressure due to overcharging of the secondary battery 100, the notch is ruptured and the gas inside the case 160 is discharged to the outside through the safety vent 173. In this manner, ignition or explosion of the secondary battery 100 can be prevented.

The gasket 174 may be made of an insulating material. The gasket 174 is formed between the terminal pillars 142 and 152 and the cap plate 170 at a lower portion of the cap plate 170 to seal portions between the terminal pillars 142 and 152 and the cap plate 170. The gasket 174 may prevent external moisture from penetrating into the secondary battery 100 or may prevent an electrolyte contained in the secondary battery 100 from leaking to the outside.

A coupling member 175 may be formed between the terminal pillars 142 and 152 and the cap plate 170 at an upper portion of the cap plate 170. In addition, the coupling member 175 may come into close contact with the gasket 174 and the cap plate 170. In some examples, the coupling member 175 formed on the terminal pillar 142 may electrically connect the cap plate 170 and the first terminal part 140 to each other, and the coupling member 175 formed on the terminal pillar 152 may insulate the cap plate 170 and the second terminal part 150 from each other.

The insulating member 180 is formed below the cap plate 170 to prevent an unnecessary short circuit between the first and second current collector plates 120 and 130 (and/or the connection plates 141 and 151) and the cap plate 170.

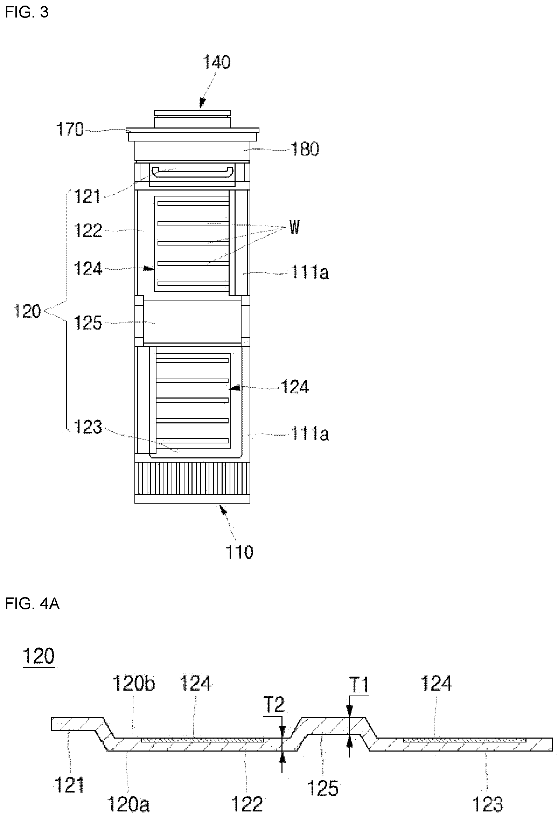

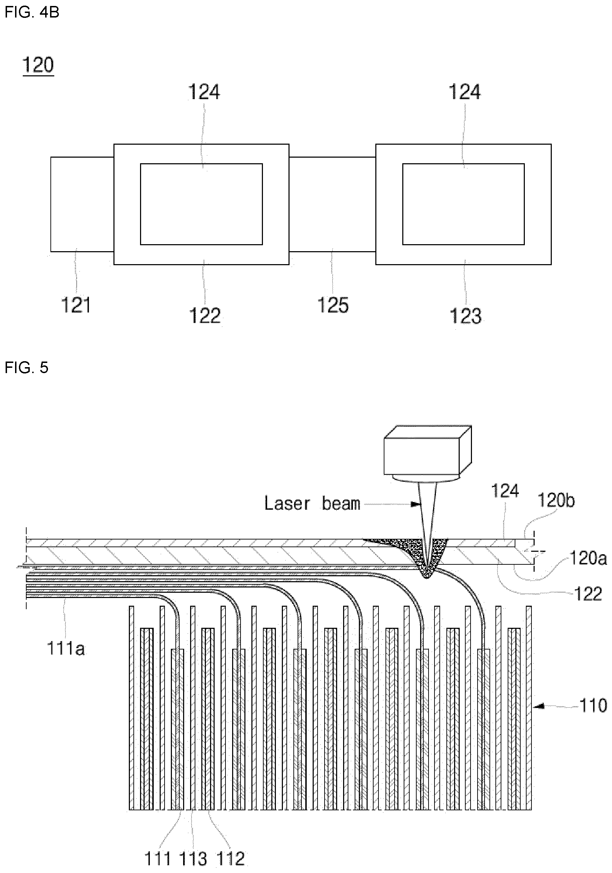

FIG. 3 is a side view illustrating a state in which the first current collector plate 120 is coupled to the electrode assembly 110. FIG. 4A is a cross-sectional view of the first current collector plate 120 of FIG. 3, and FIG. 4B is a plan view thereof. FIG. 5 is a cross-sectional view for explaining a method of welding the first electrode-uncoated portion 111a to the first current collector plate 120.

In the present invention, the first current collector plate 120 and the second current collector plate 130 have the same structure. Therefore, only the first current collector plate 120 will be described below. In addition, the first current collector plate 120 may be referred to as a current collector plate.

Referring to FIGS. 3 to 4B, the first current collector plate 120 may include a coupling part (or portion) 121, flat parts (or portions) 122 and 123, a surface treatment part (or portion) 124, and a protrusion part (or portion) 125. In addition, the first current collector plate 120 may include a first surface 120a in contact with the first electrode-uncoated portion 111a, and a second surface 120b opposite to the first surface 120a and facing the short side surface 163 of the case 160. In the first current collector plate 120, the coupling part 121, the flat parts 122 and 123, and the protrusion part 125 may also include a first surface 120a and a second surface 120b, respectively. The first current collector plate 120 may be positioned parallel to the short side surface 163 of the case 160 (see FIG. 2).

The coupling part 121 is a portion coupled to the connection plate 141 and may be located on top of the first current collector plate 120. In some examples, coupling part 121 may be electrically connected to connection plate 141 by welding. In some examples, the coupling part 121 may be integrally formed with the connection plate 141. In such an embodiment, welding between the coupling part 121 and the connection plate 141 may not be required. The coupling part 121 may protrude toward the short side surface 163 of the case 160 compared to the flat parts 122 and 123.

The flat parts 122 and 123 are portions where the first electrode-uncoated portion 111a is laser welded to the first current collector plate 120. The flat parts 122 and 123 protrude to one side of the first electrode plate 111 and may be formed on the upper and lower portions of the first current collector plate 120 so as to be respectively welded to the first electrode-uncoated portion 111a that are spaced apart from each other. The portion welded to the first electrode-uncoated portion 111a located on the upper side of one side of the first electrode plate 111 will be referred to as the first flat part 122, and the portion welded to the first electrode-uncoated portion 111a located at the lower side of the first electrode plate 111 will be referred to as the second flat part 123. The flat parts 122 and 123 may be positioned closer to the electrode assembly 110 than the coupling part 121 and the protrusion part 125. That is, steps (e.g., tapers or jogs) may be formed between the connection part 121 and the first flat part 122, between the first flat part 122 and the protrusion part 125, and between the protrusion part 125 and the second flat part 123. In this way, by placing the flat parts 122 and 123 close to the electrode assembly 110, it is possible to increase the utilization of the internal space of the case 160 and increase the capacity of the electrode assembly 110 relative to the same volume.

The surface treatment part 124 is formed on the flat parts 122 and 123 and may be formed on the second surface 120b facing outward toward the short side surface 163 of the case 160. The surface treatment part 124 is a region in which the surface roughness Ra is formed differently in the first current collector plate 120 or the flat parts 122 and 123, and welding with the first electrode-uncoated portion 111a is performed.

Specifically, the surface roughness of the surface treatment part 124 may be greater than the surface roughness of other regions of the first current collector plate 120. In other words, the surface roughness of the surface treatment part 124 may be greater than the surface roughness of the coupling part 121 or the protrusion part 125. For example, the surface roughness of the surface treatment part 124 may be approximately (about) 10 µm or less, and the surface roughness of the coupling part 121 or the protrusion part 125 may be in a range from approximately (about) 0.1 µm to approximately (about) 0.4 µm. The surface roughness of the surface treatment part 124 may be about (approximately) 25 times to about (approximately) 100 times the surface roughness of the coupling part 121 or the protrusion part 125.

The surface treatment part 124 may have a smaller area than the flat parts 122 and 123. Accordingly, even within the flat parts 122 and 123, the surface treatment part 124 and the remaining regions may be different in terms of surface roughness. That is, the surface roughness of the surface treatment part 124 may be greater than the surface roughness of the remaining regions of the flat parts 112 and 123. A laser beam may be irradiated to the surface treatment part 124. The surface treatment part 124 increases the energy absorption rate of the irradiated laser beam when the first electrode-uncoated portion 111a is welded to the flat parts 122 and 123, and thus weldability (or bondability) between the first current collector plate 120 and the first electrode-uncoated portion 111a may be improved compared to an otherwise comparable current collector plate without the surface treatment/increased surface roughness.

Referring to FIG. 3, the first current collector plate 120 and the first electrode-uncoated portion 111a are coupled by laser welding, but, by the laser beam irradiated to the surface treatment part 124, a welding region W may be formed in the surface treatment part 124 in the form of a plurality of lines. In other words, the surface treatment part 124 may be formed even in a portion where the welding region W is not formed in the flat parts 122 and 123. In this way, if the area of the surface treatment part 124 is formed to be larger than the area of the welding region W, the first electrode-uncoated portion 111a can be easily welded to the flat parts 122 and 123.

Referring to FIG. 5, a plurality of first electrode-uncoated portions 111a are bent in one direction (e.g., downward toward the bottom surface 161 of the case 160) so as to be brought into contact with the first surface 120a of the first flat part 122, and the first electrode-uncoated portion 111a may be electrically connected to the first current collector plate 120 by irradiating a laser beam to the portion of the second surface 120b of the first flat part 122 where the surface treatment part 124 is formed. In some examples, when a plurality of first electrode-uncoated portions 111a are bent in one direction, the first bent portion may protrude outward of the first flat part (122), and the protruding part may be bent again to come into contact with the second surface 120b of the first flat part 122.

The protrusion part 125 may be formed between the first flat part 122 and the second flat part 123. The protrusion part 125 may protrude toward the short side surface 163 of the case 160 compared to (relative to) the flat parts 122 and 123. As shown in FIG. 4A, the protrusion part 125 may be positioned on the same line (or plane) as the coupling part 121. A thickness T1 of the protrusion part 125 may be greater than a thickness T2 of the flat parts 122 and 123. The protrusion part 125 may serve to prevent the first current collector plate 120 from being deformed during laser welding or from an external impact.

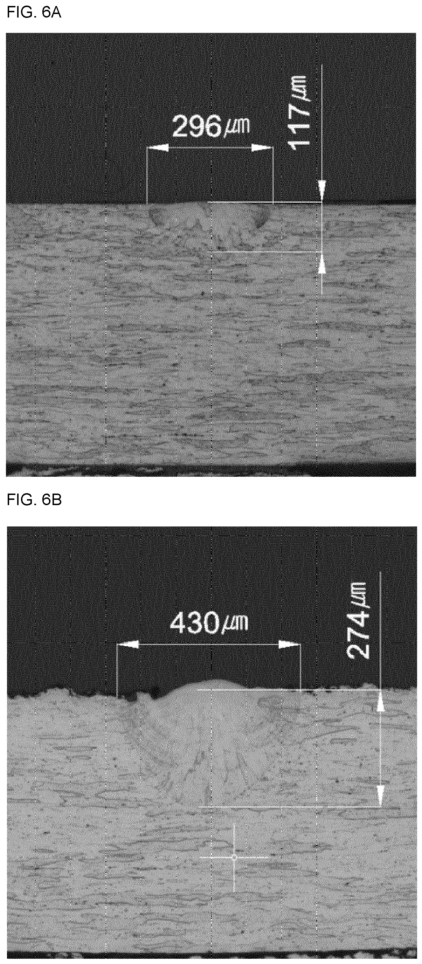

FIGS. 6A and 6B are diagrams illustrating the results of testing the effect on laser welding according to surface roughness.

FIG. 6A is a cross-sectional view when a laser beam is irradiated to an aluminum current collector plate having surface roughness of 0.3 µm, and FIG. 6B is a cross-sectional view when a laser beam is irradiated to an aluminum current collector plate having surface roughness of 3 µm. In this embodiment, the laser beam may equally have a power of 790 W and a scanning speed of 304 mm/s. A welding bead formed on the aluminum current collector plate having surface roughness of 0.3 µm, shown in FIG. 6A, has a width of 296 µm and a depth of 117 µm, and a welding bead formed on the aluminum current collector plate having surface roughness of 3 µm, shown in FIG. 6B, has a width of 430 µm and a depth of 274 µm. The welding bead of FIG. 6B had an increased width by about 46% and an increased depth by about 132%, compared to the welding bead of FIG. 6A. That is, considering that the welding bead formed on the aluminum current collector plate having a greater surface roughness, of FIG. 6B, is formed to have a greater width and depth, it can be seen that the greater the surface roughness, the higher the absorption rate of the laser beam, thereby improving weldability between the current collector plate and the electrode-uncoated portions of the electrode assembly.

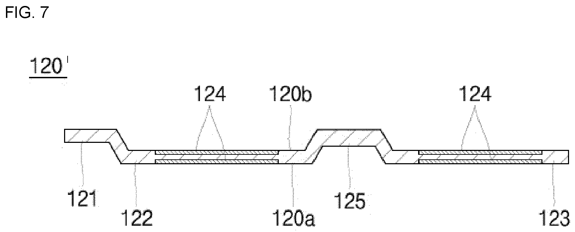

FIG. 7 is a cross-sectional view illustrating a first current collector plate according to another embodiment of the present invention.

Referring to FIG. 7, a first current collector plate 120' may include a coupling part 121, flat parts 122 and 123, a surface treatment part 124, and a protrusion part 125. The surface treatment part 124 may be formed on both sides (inner and outer sides) of the flat parts 122 and 123, that is, the first surface 120a and the second surface 120b. The surface treatment part 124 is formed on the first surface 120a in contact with the first electrode-uncoated portion 111a, and thus a frictional force between the first current collector plate 120' and the first electrode-uncoated portion 111a may be increased. Accordingly, pushing or sliding may be prevented when the first electrode-uncoated portion 111a is brought into contact with the flat parts 122 and 123 of the first current collector plate 120', thereby improving a coupling force between the first electrode-uncoated portion 111a and the first current collector plate 120'.

As described above, in the secondary battery according to the embodiment of the present invention, by forming a surface treatment part on a current collector plate, an absorption rate of a laser beam may be increased, and weldability between the current collector plate and the electrode-uncoated portion may be improved.

While the foregoing embodiment has been described to practice the secondary battery according to the present invention, it should be understood that the embodiment described herein should be considered in a descriptive sense only and not for purposes of limitation, and various changes in form and details may be made therein without departing from the scope of the invention as defined by the appended claims.

It is clear for one of ordinary skill in the art that the disclosed embodiments can be combined where possible.

## Claims

1. A secondary battery (100) comprising:
an electrode assembly (110) including a first electrode plate (111) having a first electrode-uncoated portion (111a) protruding to one side, a second electrode plate (112) having a second electrode-uncoated portion (112a) protruding to an opposite side, and a separator (113) between the first electrode plate (111) and the second electrode plate (112);
a case (160) accommodating the electrode assembly (110) and having a bottom surface (161) and long and short side surfaces (162, 163) extending upward from the bottom surface (161); and
a first current collector plate (120, 120') having a flat portion electrically connected to the first electrode plate (111), extending parallel to a short side surface (163) of the short side surfaces (163), and laser-welded to the first electrode-uncoated portion (111a), and a protrusion portion protruding from the flat portion toward the short side surface (163),
wherein a surface treatment is on the flat portion.

2. The secondary battery (100) of claim 1, wherein the surface treatment has greater surface roughness than other regions of the first current collector plate (120, 120').

3. The secondary battery (100) of claim 2, wherein the surface roughness of the surface treatment is in a range from approximately 25 to approximately 100 times the surface roughness of the other regions of the first current collector plate (120, 120').

4. The secondary battery (100) of any one of the preceding claims, wherein the first electrode plate (111) includes a first surface (120a) in contact with the first electrode-uncoated portion (111a) and a second surface (120b) opposite to the first surface (120a) and facing the short side surface (163), and wherein the surface treatment is on the second surface (120b).

5. The secondary battery (100) of any one of the preceding claims, wherein the first electrode plate (111) includes a first surface (120a) in contact with the first electrode-uncoated portion (111a) and a second surface (120b) opposite to the first surface (120a) and facing the short side surface (163), and wherein the surface treatment is on both the first surface (120a) and the second surface (120b).

6. The secondary battery (100) of any one of the preceding claims, wherein the first electrode-uncoated portion (111a) is located on an upper portion and a lower portion of one side of the first electrode plate (111), and the flat portion includes a first flat portion welded to the first electrode-uncoated portion (111a) at the upper portion of the first electrode plate (111) and a second flat portion welded to the first electrode-uncoated portion (111a) at the lower portion of the first electrode plate (111).

7. The secondary battery (100) of claim 6, wherein the protrusion portion is between the first flat portion and the second flat portion.

8. The secondary battery (100) of any one of the preceding claims, wherein a thickness of the protrusion portion is greater than a thickness of the flat portion.

9. The secondary battery (100) of any one of the preceding claims, wherein a line-shaped welding region is at the surface treatment.

10. The secondary battery (100) of any one of the preceding claims, further comprising:
a cap plate (170) coupled to an upper portion of the case (160);
a second current collector plate (130) electrically connected to the second electrode plate (112) and parallel to the short side surface (163);
a first terminal part (140) electrically connected to the first current collector plate (120, 120') and protruding upward from the cap plate (170); and
a second terminal part (150) electrically connected to the second current collector plate (130) and protruding upward from the cap plate (170).

11. The secondary battery (100) of claim 10, wherein each of the first and second terminal part (140, 150) includes a connection plate (141, 151), a terminal pillar (142, 152), and a terminal plate (143, 153).

12. The secondary battery (100) of claim 11, wherein the connection plate (141) of the first terminal part (140) is positioned above the electrode assembly (110) and electrically connected to the first current collector plate (120), and/or the connection plate (151) of the second terminal part (150) is positioned above the electrode assembly (110) and electrically connected to the second current collector plate (130).

13. The secondary battery (100) of claim 11 or 12, wherein the cap plate (170) comprises:
a gasket (174) formed between the terminal pillars (142, 152) and the cap plate (170) at a lower portion of the cap plate (170); and
a coupling member (175) formed between the terminal pillars (142, 152) and the cap plate (170) at an upper portion of the cap plate (170).

14. The secondary battery (100) of claim 13, wherein the coupling member (175) formed on the terminal pillar (142) of the first terminal part (140) electrically connects the cap plate (170) and the first terminal part (140) to each other, and the coupling member (175) formed on the terminal pillar (152) of the second terminal part (150) may insulates the cap plate (170) and the second terminal part (150) from each other.

15. The secondary battery (100) of any one of claims 10 to 14, wherein the cap plate (170) further comprises:
an electrolyte injection hole (171) formed through the cap plate (170);
a plug (172) coupled to the electrolyte injection hole (171); and
a safety vent (173) formed at a substantially central portion of the cap plate (170).
